# EUROPEAN PATENT SPECIFICATION

(11) **EP 2 339 465 B1**
(45) Date of publication and mention of the grant of the patent: **26.02.2014**
(21) Application number: 10013725.6
(22) Date of filing: 18.10.2010
(51) Int. Cl.: G06F 9/54, G06F 9/46

(54) **Location independent execution of user interface operations**
Ortsunabhängige Ausführung von Benutzerschnittstellenoperationen
Exécution indépendamment de l'emplacement d'opérations d'interface utilisateur

(30) Priority: 07.12.2009 US 632253
(43) Date of publication of application: 29.06.2011
(73) Proprietor: SAP AG, 69190 Walldorf (DE)
(72) Inventor: Gürtler, Jochen, 69190 Walldorf (DE); Gross, Ran, 69190 Walldorf (DE); Sherman, Yahali, 69190 Walldorf (DE); Tammam, Ariel, 69190 Walldorf (DE)
(74) Representative: Müller-Boré & Partner Patentanwälte PartG mbB

(56) References cited:
- US-A- 5 046 002
- US-A- 5 757 925
- US-A- 5 905 884
- US-A1- 2002 109 718
- ERIC WOHLSTADTER ET AL: "Web Service Mashup Middleware with Partitioning of XML Pipelines", WEB SERVICES, 2009. ICWS 2009. IEEE INTERNATIONAL CONFERENCE ON, IEEE, PISCATAWAY, NJ, USA, 6 July 2009 (2009-07-06), pages 91-98, XP031497804, ISBN: 978-0-7695-3709-2

## Description

This disclosure relates to systems, methods, and software that involve location-independent execution of user interface operations. For example, the present disclosure provides a framework that facilitates switching between client-side or server-side operation processing, often in real-time.

### BACKGROUND

Graphical user interfaces (GUIs) allow a computer user to control a computer system and to input and modify data on a computer system through a display interface. Some applications implement UIs in a client program running in a client server architecture, such as a Web browser. The UIs typically include controls operable by a user to interact with the applications. Controls can include buttons, menus, pull-down menus, dialog boxes, scroll bars, and any other controls that enable the user to view application data, invoke application functionality, and otherwise interact with an application. Each control has an associated control state, and the application has an associated UI state. The control states and the UI state can change based on user interaction. Navigation in a GUI typically involves moving a pointing device such as a mouse to an active element and activating the element by clicking on the element. Alternatively, various keystrokes from a keyboard device (*e.g*., pressing the "tab" key) allow a user to traverse the GUI elements.

Developing User Interface (or web) application frameworks often involves a debate as to whether operations or user interactions (*e.g*. the user clicks on a link or button to trigger an operation) should be handled at the client-side (perhaps using a Java Script framework running within the browser) or on the server-side (perhaps using a Java framework running on an web application server). A visual representation of the application can be generated by rendering the UI state of the application in a client program running in a client server architecture, *e.g*., the Web browser.

US 5 757 925 discloses a method including the steps of providing a set of user interface element rules accessible to a user interface management program. where the rules allow the user interface management program to filter user events and decide which can be initially handled on a client to update user interface elements on the client display and which will be forwarded to the server for initial processing and processing reported user interface element definitions in the user interface management program to display on the client user interface elements corresponding to the user interface element definitions.

### SUMMARY

An aspect of the present disclosure is directed to location-independent execution of user interface operations or interactions. For example, a computer program product for location-independent execution of user interface operations comprises a tangible storage medium storing computer-readable instructions. In one instance, the instructions are operable to identify a user interaction through a client-side user interface that is communicably coupled with a server-side computer. The instructions then dynamically determine whether to process the identified user interaction on the client-side or the server-side. The dynamic determination is made according to a plurality of criteria, including processing capability, number of roundtrips, and operating environment. And if the user interaction is to be processed on the client-side, the stored instructions invoke a client-side action handler. Otherwise, if the user interaction is to be processed on the server-side, the instructions request that a server-side action handler process the interaction.

Various embodiments may implement or utilize one or more of the following features. For example, the stored instructions may request that the server-side action handler process the interaction comprise by determining whether the user interaction involves a synchronous or asynchronous action and requesting that one of a synchronous server-side action handler or an asynchronous server-side action handler process the interaction based on the determination. In another example, the stored instructions may utilize a rules repository, or other similar logic, to determine whether to process the identified user interaction on the client-side or the server-side. This example rules repository can include a primary key that is, *e.g*. directly, mapped to the particular interaction or can include rules that store dynamic expressions of various interactions action. In yet another example, the stored instructions are further operable to receive the client-side action handler with user interface from the server-side computer. In situations where the user interaction involves multiple event cycles, the dynamic determination of whether to process the identified user interaction on the client-side or the server-side can occur for each event cycle.

While generally described as computer implemented software that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGURE 1 illustrates an example system providing location-independent execution of user interface operations or interactions in accordance with one implementation of the present disclosure.
FIGURE 2 is an example configuration of a wire described in FIGURE 1.
FIGURE 3 is an example instance of a wire described in FIGURE 2.
FIGURE 4 is an example wiring events cycle at runtime using the system described in FIGURE 1.
FIGURE 5 illustrates various usage cases of the system described in FIGURE 1.
FIGURES 6A-C illustrate various example flows of the usage cases of FIGURE 5 in accordance with one implementation of the present disclosure.
FIGURE 7 illustrates an example wiring runtime sequence in accordance with one implementation of the present disclosure.

### DETAILED DESCRIPTION

An aspect of the present disclosure is directed to a system providing location-independent execution of user interface operations or interactions. More specifically, the system provides a framework for addressing the "client-side" vs. "server-side" question on a case by case manner. Put differently, there may be a need in an enterprise solution to control the origin of the request, particularly for external content. For example, a service provider may limit the access to the service from the customer machine or from the hosting environment. In another example, the solution may implement security such that external web content can be fetched from server side and not directly by the client browser (which may help control the size of data, filter out suspicious sites with a black list, *etc.*)*.* The system may implement the server-side approach for most of the scenarios. Yet, in a particular runtime scenario, the system can implements mechanisms to execute a user-interaction on the client-side if this makes sense for this scenario or otherwise satisfies particular criteria. These criteria may include, among other things, determining if this improves the performance of the system or overall operation, if this saves roundtrips, or if this is not too complex to handle. In many cases, the decision as to which model to use to execute the interaction can be chosen by the framework transparently for the developer (i.e. the developer has not to decide whether to use a client-side or server-side approach). Depending on the running scenario / application, the framework dynamically decides which approach to implement. This could also depend on the environment the scenario / application is running (e.g., it could be a difference if an application is running within a portal). In short, the system does not enforce definitions beforehand (or in general), but instead provides the ability to implement case-by-case decisions and an optimized solution for a specific situation or scenario. As such, in certain configurations, this infrastructure may not be restricted to a client-side or server-side approach, may not be restricted to a certain system landscape, and may not be restricted to any specific UI technology.

One example is in the area of roundtrip optimizations. In this example, the user would like to trigger a navigation to another application. Depending on the scenario, this may be done via a direct client-side call (e.g. in simple scenarios, where the application can execute the operation as relatively standalone application) or via a server-roundtrip (*e.g*. in more complex scenarios, where the framework helps ensure consistency between other applications running on the same page before triggering the navigation). Instead of providing only one of the possibilities, the framework can provide one API to trigger the navigation, while overall the framework decides where to execute this navigation (i.e. on the client-side or on the server-side).

Another example is in the area of mashups (i.e. a composition of several small "applications" or "chips" that are connected via "wires" to have a simple communication) that include components or other technology from either server side or client side. To build a mashup, the "wiring" is typically done based on a event-based communication infrastructure. There can be pure client-side based mashup environments and there are server-based environments. Instead of defining the location of the processing of the interaction in a static way, the described framework can execute the operation according to different constraints. These example constraints can include: which type of applications are part of the mashup scenario and the current wiring? For example, the application can include only client-side, only server-based applications (with client front-end), or a combination. To help avoid undesired roundtrips, the framework may execute the user interaction on the client-side (e.g. if the user clicks on a control that changes some state in some other client-side app). Otherwise, the framework may determine that, e.g., i) the user interaction involves a too complex operation; ii) it is difficult to guarantee a consistent screen and, therefore, request that the operation done primarily on the server side; or iii) a mashup scenario with mixed runtime technologies (client side and server side) such that a combined event cycle is needed.

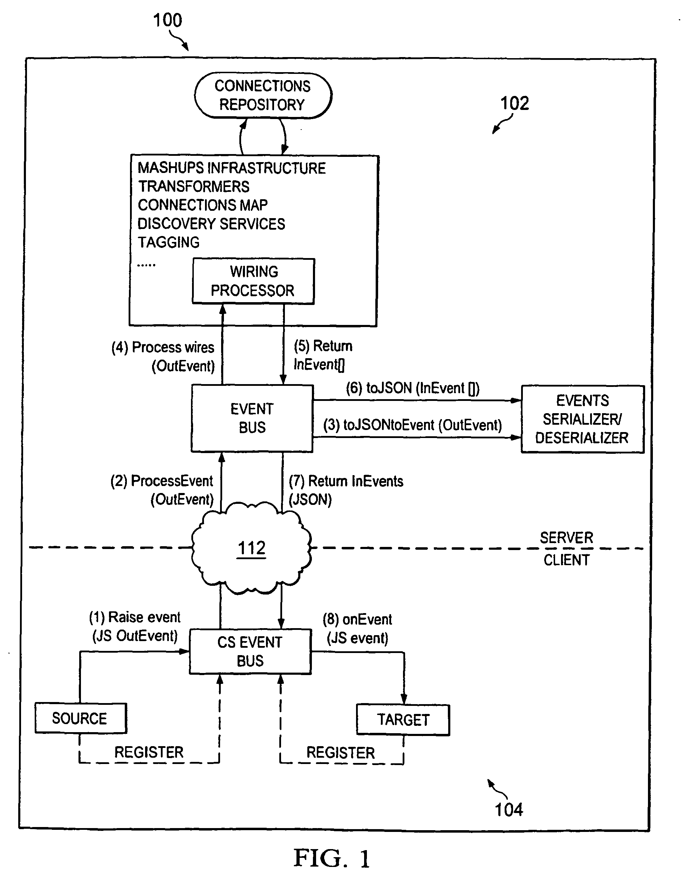

Turning to the illustrated embodiment, FIGURE 1 illustrates an example system 100 that implements a landscape aware inter-application communication infrastructure. System 100 may be a distributed client/server system that spans one or more networks. In such implementations, data may be communicated or stored in an encrypted format using any standard or proprietary encryption algorithm. But system 100 may be in a dedicated enterprise environment-across a local area network or subnet-or any other suitable environment without departing from the scope of this disclosure. The system 100 may include or be communicably coupled with a server 102, one or more clients 104, and one or more networks 112.

The server 102 comprises an electronic computing device operable to receive, transmit, process, and store data associated with system 100. Generally, FIGURE 1 provides merely one example of computers that may be used with the disclosure. Each computer is generally intended to encompass any suitable processing device. For example, although FIGURE 1 illustrates one server that may be used with the disclosure, system 100 can be implemented using computers other than servers, as well as a server pool. Indeed, server may be any computer or processing device such as, for example, a blade server, general-purpose personal computer (PC), Macintosh, workstation, Unix-based computer, PDAs, smart phones in order to provide offline capabilities (small footprint server in the device), or any other suitable device. In other words, the present disclosure contemplates computers other than general purpose computers as well as computers without conventional operating systems. The server may be adapted to execute any operating system including Linux, UNIX, Windows Server, or any other suitable operating system. According to one embodiment, the server may also include or be communicably coupled with a web server and/or a mail server.

The server may include local memory. The memory is any tangible computer-readable memory that may include any memory or database module taking the form of volatile or non-volatile memory including, without limitation, magnetic media, optical media, random access memory (RAM), read-only memory (ROM), removable media, or any other suitable local or remote memory component. The memory may include, among other items, framework for location-independent execution of user interface operations or interactions and a plurality of applications, described in more detail below. Further, the memory may include one or more operating environments. The memory may also include other types of data, such as environment and/or application description data, application data for one or more applications, as well as data involving VPN applications or services, firewall policies, a security or access log, print or other reporting files, HyperText Markup Language (HTML) files or templates, related or unrelated software applications or sub-systems, and others. Consequently, the memory may also be considered a repository of data, such as a local data repository from one or more applications. Indeed, the location independent framework may reside both on server side and client side (client side logic and dispatching).

More specifically, the framework any application, program, module, process, or other software that is capable of using or facilitates usage of landscape aware inter-application communication infrastructure, which is itself software. Regardless of the particular implementation, "software" may include software, firmware, wired or programmed hardware, or any combination thereof embodied on tangible computer readable media. Indeed, form transformation module 130 may be written or described in any appropriate computer language including C, C++, Java, Visual Basic, assembler, Perl, any suitable version of 4GL, as well as others. For example, form transformation module 130 may be a composite application, portions of which may be implemented as Enterprise Java Beans (EJBs) or the design-time components may have the ability to generate run-time implementations into different platforms, such as J2EE (Java 2 Platform, Enterprise Edition), ABAP (Advanced Business Application Programming) objects, or Microsoft's .NET.

According to some implementations, the communications may be in the form of one or more eXtensible Markup Language (XML) documents files or portions or Structured Query Language ("SQL") statements or scripts of a scripting language, a script language, or an extension language. For example, the communication structure 145 may be formatted, stored, or defined as various data structures in text files, Virtual Storage Access Method (VSAM) files, flat files, Btrieve files, comma-separated-value (CSV) files, internal variables, or one or more libraries. Aside from XML, other example scripting languages may include JavaScript, Cascading Style Sheets (CSS), HTML, asynchronous JavaScript and XML (AJAX), as well as others.

The server may also include processor. The processor executes instructions, such as the foregoing software, and manipulates data to perform the operations of the server and may be, for example, a central processing unit (CPU), a blade, an application specific integrated circuit (ASIC), or a field-programmable gate array (FPGA). It will be understood that multiple processors may be used according to particular needs and reference to a processor is meant to include multiple processors where applicable.

The network 112 facilitates wireless or wireline communication between computer the server and any other local or remote computer, such as clients 104. The network may be all or a portion of an enterprise or secured network. In another example, the network may be a VPN merely between the server and the client across wireline or wireless link. Such an example wireless link may be via 802.11a, 802.11b, 802.11g, 802.20, WiMax, and many others. While illustrated as a single or continuous network, the network may be logically divided into various sub-nets or virtual networks without departing from the scope of this disclosure, so long as at least a portion of the network may facilitate communications between the server and at least one client. For example, the server may be communicably coupled to a repository through one sub-net while communicably coupled to a particular the client through another. In other words, the network encompasses any internal or external network, networks, sub-network, or combination thereof operable to facilitate communications between various computing components in system 100. The network may communicate, for example, Internet Protocol (IP) packets, Frame Relay frames, Asynchronous Transfer Mode (ATM) cells, voice, video, data, and other suitable information between network addresses. The network may include one or more local area networks (LANs), radio access networks (RANs), metropolitan area networks (MANs), wide area networks (WANs), all or a portion of the global computer network known as the Internet, and/or any other communication system or systems at one or more locations. In certain embodiments, the network may be a secure network accessible to users via certain local or remote clients 104.

The client 104 may be any computing device operable to connect or communicate with the server or the network using any communication link. At a high level, each the client includes or executes at least a GUI and comprises an electronic computing device operable to receive, transmit, process and store any appropriate data associated with system 100. Moreover, the client includes a tangible memory and one or more processors. It will be understood that there may be any number of clients communicably coupled to server. Further, "client," "local machine," and "user" may be used interchangeably as appropriate without departing from the scope of this disclosure. Moreover, for ease of illustration, each the client is described in terms of being used by one user. But this disclosure contemplates that many users may use one computer or that one user may use multiple computers. As used in this disclosure, the client is intended to encompass a personal computer, touch screen terminal, workstation, network computer, kiosk, wireless data port, smart phone, personal data assistant (PDA), one or more processors within these or other devices, or any other suitable processing device. For example, the client may be a PDA operable to wirelessly connect with an external or unsecured network. In another example, the client may comprise a laptop computer that includes an input device, such as a keypad, touch screen, mouse, or other device that can accept information, and an output device that conveys information associated with the operation of the server or clients, including digital data, visual information, or GUI. Both the input device and output device may include fixed or removable storage media such as a magnetic computer disk, CD-ROM, or other suitable media to both receive input from and provide output to users of clients through the display, namely the client portion of GUIs or application interface.

The GUI can comprise a graphical user interface operable to allow the user of the client to interface with at least a portion of system 100 for any suitable purpose, such as viewing application or other transaction data. For example, the GUI could present various views on business information that are has been communicated between one or more applications or application instances, often via pages or containers. Generally, the GUI provides the particular user with an efficient and user-friendly presentation of data provided by or communicated within system 100. the GUI may comprise a plurality of customizable frames or views having interactive fields, pull-down lists, and buttons operated by the user. The GUI may also present a plurality of portals or dashboards. For example, the GUI may display a secure webpage that allows users to input and define search parameters for one or more modules. It should be understood that the term graphical user interface may be used in the singular or in the plural to describe one or more graphical user interfaces and each of the displays of a particular graphical user interface. Indeed, reference to the GUI may indicate a reference to the front-end or a component of application, as well as the particular interface accessible via the client, as appropriate, without departing from the scope of this disclosure. Therefore, the GUI contemplates any graphical user interface, such as a generic web browser or touch screen, that processes information in system 100 and efficiently presents the results to the user. The server can accept data from the client via the web browser (e.g., Microsoft Internet Explorer or Netscape Navigator) and return the appropriate HTML or XML responses to the browser using the network.

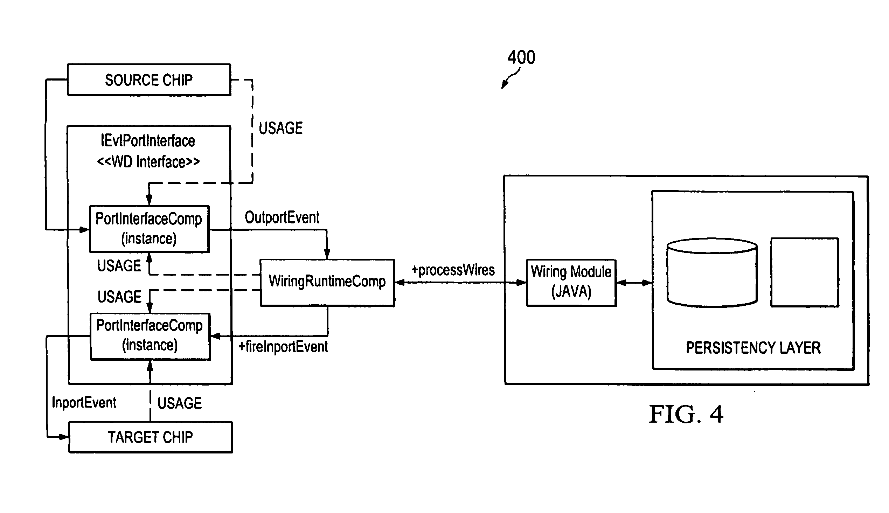

On the client side, there can be a client action dispatcher (CAD) or event bus or framework and application logic. In certain configurations, this is the single entry point for user interactions triggered by the user (e.g. by pressing a button, selecting a table row, and so forth). The CAD gets the action and analysis it using the rules engine. The rules engine can access the rules repository. The rules repository contains rules how "actions" should be processed. In the simplest case this is a simple mapping (e.g. "button click -> server call" ) but you could also image that the rules are dynamic expressions to decided how the action should be processed. The CAD can dispatch the action then to the needed action handler. More specifically, while wires information is usually stored in the server, the runtime processors (controllers) can be implemented either in client side and/or server side and responsible to mitigate between client side event cycles and server side events cycles. For example, FIGURE 4 illustrates a server-side implementation. Returning to FIGURE 1, the illustrated configuration describes a complementary client-side runtime component, which helps make the solution environment agnostic (meaning that it is able to handle both client side UI components and server side UI components in an event cycle).

Client side calls are handled directly by the client call action handler (or some other related module). For the server side call, the CAD (or some other related module) may differentiate between synchronous and asynchronous calls and, as such, may send the request to the appropriate synchronous and asynchronous handler. Also on the server side, there may be a specific application container running an application. For each channel, the application could then be called from the client-side via an server-side action handler (in the above example one for the synchronous calls and one for the asynchronous calls).

In one example of operation of a mashup configuration, as shown in example FIGURE 1, a RaiseEvent call is identified by the client-side event bus from the source. The CAD triggers a ProcessEvent call to the server-side event bus, which calls an Events Serializer/Deserializer via fromJSONtoEvent. The server-side event bus contacts the mashup infrastructure (perhaps the wiring processor) via ProcessWires, which then invokes ReturnInEvent. This event is then processed by the Events Serializer/Deserializer, via toJSON, and returned to the client-side event bus via ReturnInEvents. The CA then sends the event to the target via onEvent.

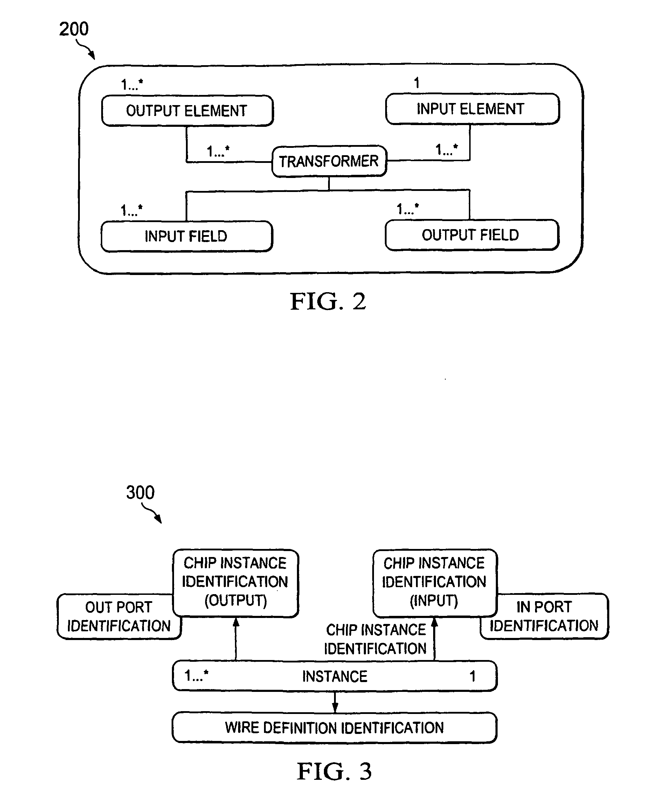

FIGURE 2 is an example configuration 200 of a wire described in FIGURE 1. The structure of the wiring definition object contains a transformer, which represents the actual wiring transformation data between sources and target chip definitions ports. In other words, transformers help enable communication for substantially incompatible components to communicate with each other and exchange information. Transformers may translate information according to definitions implemented within a particular object class. To ease processing, simple transformation may be done on client-side, but more complex transformation with business logic (service calls) may be done on server side. As such, a hybrid solution can enable this mixed flow of data. In this example, the wire definition 200 also includes one or more output elements, an input element, one or more input fields, and one or more output fields. In some situations, the wiring persistency can be optimized for runtime, runtime authoring and admin scenarios. In runtime processes, the out events from source is transformed into in events to a target. The wiring data is transported, and can be associated with a container (workspace / page) such that its lifecycle can be managed with the container's lifecycle. It will be understood that this is an abstract illustration of a wire, such that there is a derived client-side based representation of it (JavaScript based) and derived server-side based representation of it (java based). These two co-exist and share the same definitions. This configuration helps enable running a client side events scenario and server side events scenario based on the same metadata while activating the respective transformer and event handlers according to the environment.

The wire definitions can be stored in a global repository (or other persistency) and represent wire that have been created on the system. In some cases, these definitions can be accessed by various wiring instances in the differing systems. When a new instance is added, wire definitions can be searched by suggestion mechanism.

FIGURE 3 is an example instance 300 of a wire described in FIGURE 2. This instance 300 maps source chip instance's out-ports, and a target chip instance's inport, to a particular wire definition. In some configurations, the instance is associated with a particular container (page / workspace) and it helps provide fast access to a corresponding wire definition in runtime. As noted above, the life cycle of a wiring instance is often related to the container. For example, when the page is deleted / copied/ transported the wired instances of the page should typically be handled the same way. To help accomplish this, one implementation may be to store wire instances locally under the page, as XML representation in an attribute. An example of this implementation may be as follows:

```
        <wiring>
         <target id="" port="" wireDefinitionId="">
              <src id="" port=""/>
              <src id="" port=""/>
             ..
         </target>
              ..
       <wiring>
```

In this example, the wiring map will be resolved at runtime to a dedicated data structure in memory, which will provide fast access to the relevant wiring data. Of course, this example implementation is for illustration purposes only and any language, format, or other implementation details may be utilized as appropriate.

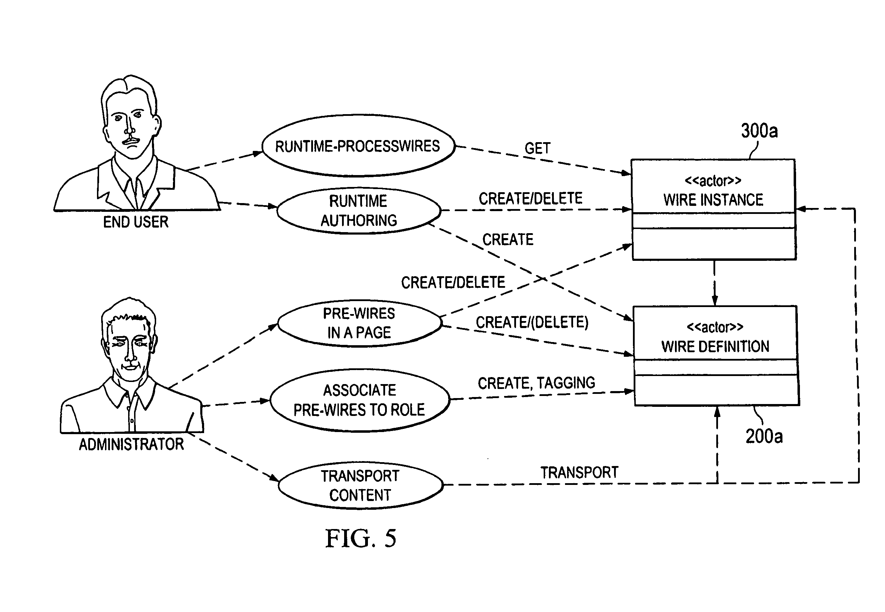

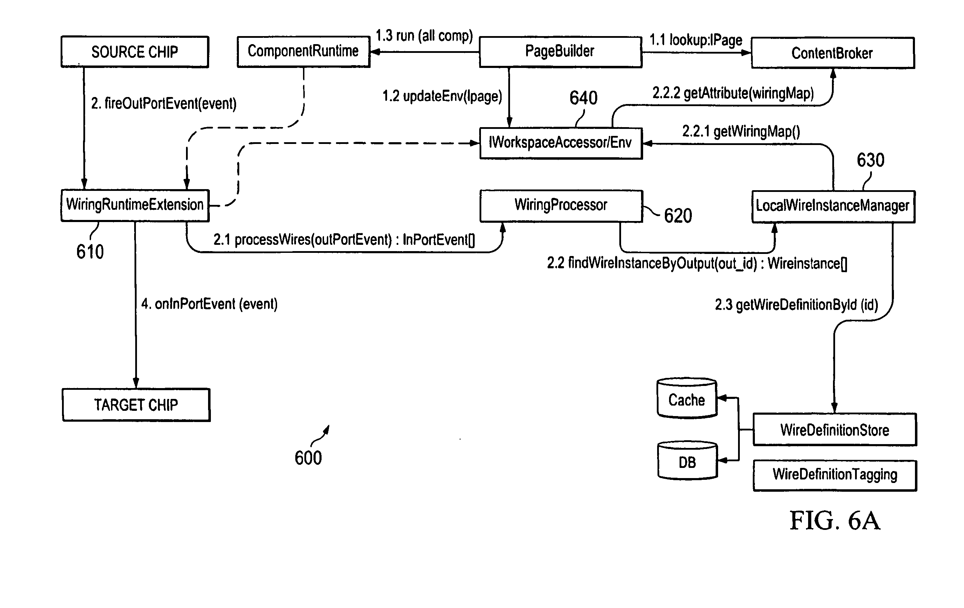

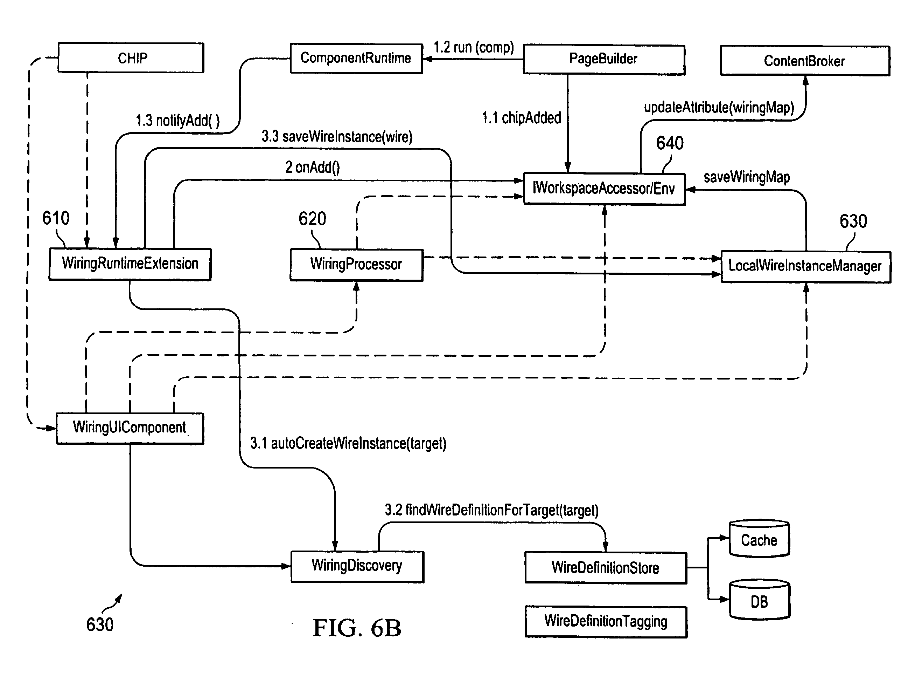

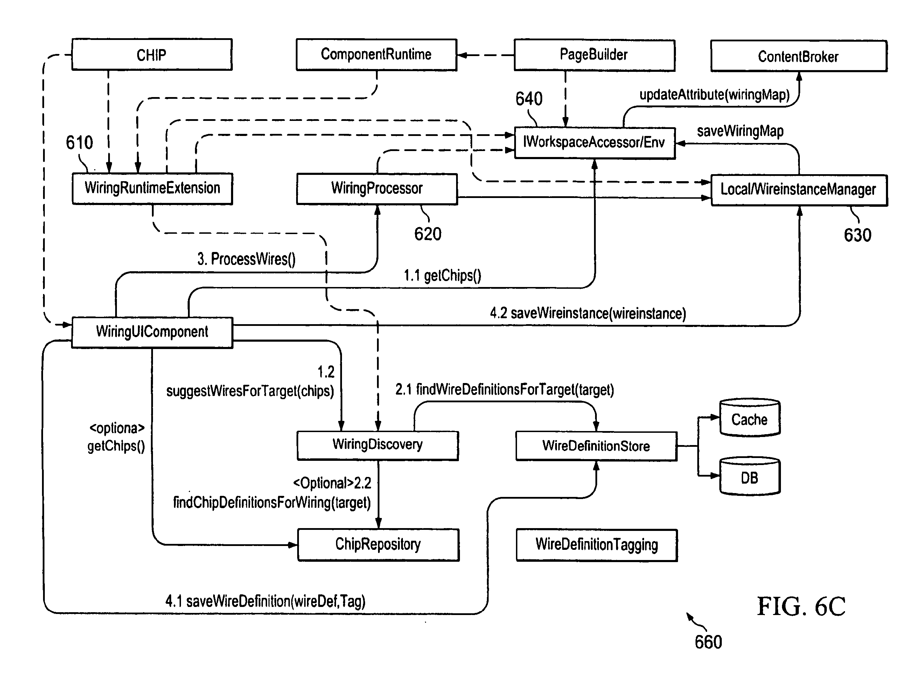

FIGURE 5 illustrates various usage cases of the system described in FIGURE 1. At a high level, the illustration depicts three usage cases: runtime, runtime authoring, and administration, each of which is described in more detail in FIGURE 6. Specifically, FIGURE 6A illustrates example components and data flow 600 to implement run time processing of wires, FIGURE 6B illustrates example components and data flow 630 to implement run time authoring of wires, and FIGURE 6C illustrates example components and data flow 660 to implement administration of wires.

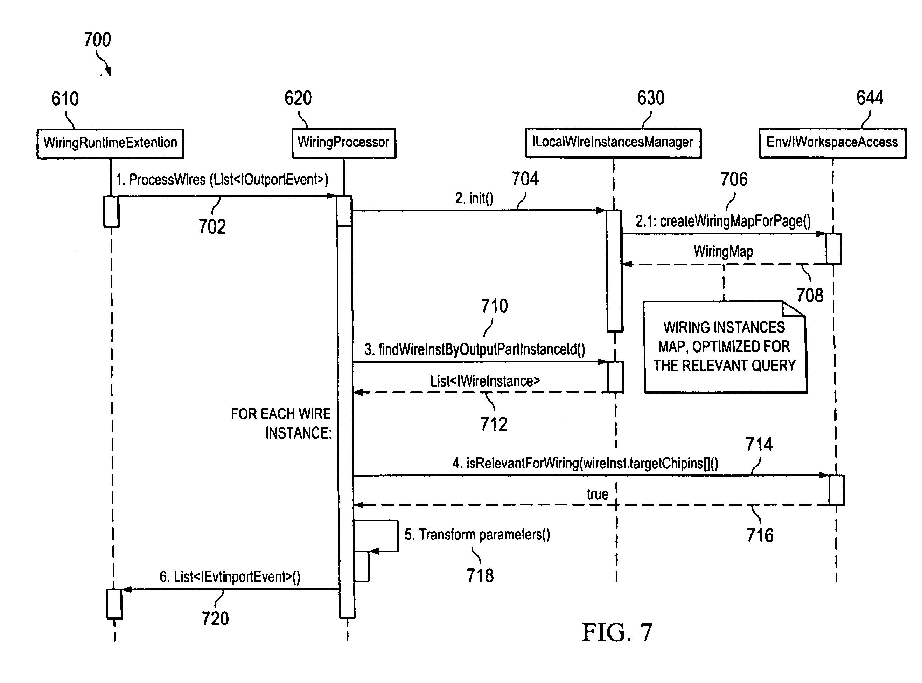

FIGURE 7 illustrates an example wiring runtime sequence 700 in accordance with one implementation of the present disclosure, such as data flow 600. For clarity of presentation, the description that follows generally describes method 700 in the context of environment illustrated in FIGURE 1. However, it will be understood that the method 700 may alternatively be performed by any other suitable system, environment, or combination of systems and environments as appropriate.

Specifically, runtime sequence 700 illustrates that the WiringRuntimeExtension 610 calls the WiringProcessor 620 via a ProcessWires method at 702. The WiringProcessor then invokes the iLocalWirelnstanceManager 630, perhaps via an init() method call at 704. The Environment or Workspace access module 640 is invoked via a createWiringMapForPage() at 706, which generates and returns the WiringMap at 708. The WiringProcessor determines the wiring instances 300 by contacting the iLocalWireInstanceManager module at step 710, which are returned at step 712. These instances may be returned as any appropriate communication or data structure, such as an array, objects, or a list. The WiringProcessor then contacts the Environment or Workspace access module to determine if each particular wiring instance is relevant for this particular action at 714 and 716. The WiringProcessor then transforms the parameters at step 718 and returns the inport events at 720.

While the present disclosure uses a plurality of data and processing flows and accompanying descriptions to illustrate the example techniques associated with the various disclosed methods and techniques, system 100 contemplates using or implementing any suitable technique for performing these and other tasks. It will be understood that these techniques are for illustration purposes only and that the described or similar techniques may be performed at any appropriate time, including concurrently, individually, or in combination. In addition, many of the steps in these flows may take place simultaneously and/or in different orders than as shown and described. Moreover, system 100 may use processes and methods with additional, fewer, and/or different steps, so long as the processes and methods remain appropriate. In short, although this disclosure has been described in terms of certain implementations and generally associated methods, alterations and permutations of these implementations and methods will be apparent to those skilled in the art. Accordingly, other implementations are within the scope of the following claims.

## Claims

1. A computer-implemented method for location-independent execution of user interface operations using a wire (200) that connects applications in a mashup, wherein the wire (200) includes one or more output elements, an input element, one or more input fields, and one or more output fields, wherein the wire (200) contains a transformer that translates information according to implemented definitions thereby enabling communication among the applications, the method comprising the following steps executed by one or more processors:
deriving a client-side based JavaScript representation of the wire (200);
deriving a server-side based Java representation of the wire (200);
wherein the client-side based representation and the server-side based representation use the same metadata and share the same definitions;
identifying a user interaction through a client-side user interface that is communicably coupled with a server-side computer, wherein the user interaction triggers navigation from one of the applications to another of the applications;
dynamically determining whether to process the identified user interaction on the client-side or the server-side, wherein the dynamic determination is made according to all of a plurality of criteria, wherein the criteria include processing capability, number of roundtrips, operating environment, difficulty in ensuring consistency among the applications before triggering the navigation and whether the applications are
- only on the client side,
- based on the server-side with a client-side front end, or
- a combination of client-side and server based applications;
if the user interaction is to be processed on the client-side, invoking a client-side action handler; and
if the user interaction is to be processed on the server-side, requesting that a server-side action handler process the interaction.

2. The computer implemented method of Claim 1, where requesting that a server-side action handler process the interaction comprises:
determining whether the user interaction involves a synchronous or asynchronous action; and
requesting that one of a synchronous server-side action handler or an asynchronous server-side action handler process the interaction based on the determination.

3. The computer implemented method of Claim 1 or 2, where dynamically determining whether to process the identified user interaction on the client-side or the server-side comprises utilizing a rules repository to determine whether to process the identified user interaction on the client-side or the server-side.

4. The computer implemented method of Claim 3, where the rules repository includes a primary key that is mapped to the particular interaction.

5. The computer implemented method of Claim 3 or 4, where the rules repository includes rules that store dynamic expressions to decide how the user interaction should be processed.

6. The computer implemented method of any one of the preceding claims, further comprising receiving the client-side action handler with user interface code from the server-side computer.

7. A computer program product comprising computer readable instructions, which when loaded and run in a computer and/or computer network system, causes the computer and/or the computer network system to perform operations according to a method of any one of the preceding claims.

8. A computer system for communicating via an inter-application communication infrastructure using a wire (200) that connects applications in a mashup, wherein the wire (200) includes one or more output elements, an input element, one or more input fields, and one or more output fields, wherein the wire (200) contains a transformer that translates information according to implemented definitions thereby enabling communication among the applications, the computer system comprising:
memory storing a client-side user interface and a client-side action handler; and
one or more processors that, when executed:
derive a client-side based JavaScript representation of the wire (200);
derive a server-side based Java representation of the wire (200);
wherein the client-side based representation and the server-side based representation use the same metadata and share the same definitions;
identify a user interaction through the client-side user interface that is communicably coupled with a server-side computer, wherein the user interaction triggers navigation from one of the applications to another of the applications;
dynamically determine whether to process the identified user interaction on the client-side or the server-side, wherein the dynamic determination is made according to all of a plurality of criteria, wherein the criteria include processing capability, number of roundtrips, operating environment, difficulty in ensuring consistency among the applications before triggering the navigation and whether the applications are
- only on the client side,
- based on the server-side with a client-side front end, or
- a combination of client-side and server based applications;
if the user interaction is to be processed on the client-side, invoke the client-side action handler; and
if the user interaction is to be processed on the server-side, request that a server-side action handler process the interaction.

9. The computer system of Claim 8, where the one or more processors requesting that a server-side action handler process the interaction comprises the one or more processors:
determining whether the user interaction involves a synchronous or asynchronous action; and
requesting that one of a synchronous server-side action handler or an asynchronous server-side action handler process the interaction based on the determination.

10. The computer system of Claim 8 or 9, where the memory further stores a rules repository and where the one or more processors dynamically determine whether to process the identified user interaction on the client-side or the server-side by utilizing the rules repository.

11. The computer system of Claim 10, where the rules repository includes a primary key that is mapped to the particular interaction.

12. The computer system of Claim 10 or 11, where the rules repository includes rules that store dynamic expressions to decide how the user interaction should be processed.

13. The computer system of any one of claims 8 to 12, the one or more processors further operable to receive the client-side action handler with user interface code from the server-side computer.

## Patentansprüche

1. Computerimplementiertes Verfahren zur orts- bzw. standortunabhängigen Ausführung von Benutzerschnittstellenoperationen unter Verwendung eines Drahts (200), der Anwendungen in einem Mashup verbindet, wobei der Draht (200) ein oder mehrere Ausgangs- bzw. Ausgabeelemente, ein Eingangs- bzw. Eingabeelement, ein oder mehrere Eingangs- bzw. Eingabefelder und ein oder mehrere Ausgangs- bzw. Ausgabefelder umfasst, wobei der Draht (200) einen Transformator enthält, der Informationen gemäß implementierter Definitionen übersetzt, wodurch eine Kommunikation zwischen den Anwendungen ermöglicht wird, wobei das Verfahren die folgenden Schritte umfasst, die von einem oder mehreren Prozessoren ausgeführt werden:
Herleiten einer client-seitenbasierten JavaScript-Darstellung des Drahts (200);
Herleiten einer server-seitenbasierten Java-Darstellung des Drahts (200);
wobei die client-seitenbasierte Darstellung und die server-seitenbasierte Darstellung dieselben Metadaten nutzen und dieselben Definitionen teilen;
Identifizieren einer Benutzerinteraktion durch eine client-seitige Benutzerschnittstelle, die kommunikativ mit einem server-seitigen Computer gekoppelt ist, wobei die Benutzerinteraktion eine Navigation von einer der Anwendungen zu einer anderen der Anwendungen auslöst;
dynamisches Bestimmen, ob die identifizierte Benutzerinteraktion auf der Client-Seite oder der Server-Seite zu verarbeiten ist, wobei die dynamische Bestimmung gemäß aller einer Mehrzahl von Kriterien gemacht wird, wobei die Kriterien umfassen: Prozess- bzw. Verarbeitungsfähigkeit, Anzahl an Roundtrips, Betriebsumgebung, Schwierigkeiten beim Sicherstellen der Konsistenz bzw. Widerspruchsfreiheit zwischen den Anwendungen vor dem Auslösen der Navigation, und ob die Anwendungen
- nur auf der Client-Seite sind,
- basierend auf der Server-Seite mit einem client-seitigen Front-End sind, oder
- eine Kombination von Client-Seite und server-basierten Anwendungen sind;
wenn die Benutzerinteraktion auf der Client-Seite zu verarbeiten ist, Aufrufen eines client-seitigen Aktions-Handlers; und
wenn die Benutzerinteraktion auf der Server-Seite zu verarbeiten ist, Anfordern, dass ein server-seitiger Aktions-Handler die Interaktion verarbeitet.

2. Computerimplementieres Verfahren nach Anspruch 1, wo das Anfordern, dass ein server-seitiger Aktions-Handler die Interaktion verarbeitet, umfasst:
Bestimmen, ob die Benutzerinteraktion eine synchrone oder asynchrone Aktion beinhaltet; und
Anfordern, dass einer eines synchronen server-seitigen Aktions-Handlers oder eines asynchronen server-seitigen Aktions-Handlers die Interaktion verarbeitet, und zwar basierend auf der Bestimmung.

3. Computerimplementieres Verfahren nach Anspruch 1 oder 2, wo das dynamische Bestimmen, ob die identifizierte Benutzerinteraktion auf der Client-Seite oder der Server-Seite zu verarbeiten ist, die Verwendung eines Regel-Repository umfasst, das bestimmt bzw. um zu bestimmen, ob die identifizierte Benutzerinteraktion auf der Client-Seite oder der Server-Seite zu verarbeiten ist.

4. Computerimplementieres Verfahren nach Anspruch 3, wo das Regel-Repository einen Primärschlüssel enthält, der auf die bestimmte Interaktion abgebildet bzw. gemappt ist bzw. wird.

5. Computerimplementieres Verfahren nach Anspruch 3 oder 4, wo das Regel-Repository Regeln enthält, die dynamische Ausdrücke speichern, um zu entscheiden, wie die Benutzerinteraktion zu verarbeiten ist.

6. Computerimplementieres Verfahren nach einem der vorhergehenden Ansprüche, ferner umfassend ein Empfangen des client-seitigen Aktions-Handlers mit Benutzerschnittstellencode von dem server-seitigen Computer.

7. Computerprogrammprodukt, umfassend computerlesbare Instruktionen, die, wenn in einem Computer und/oder Computernetzwerksystem geladen und ausgeführt, den Computer und/oder das Computernetzwerksystem veranlassen, Operationen gemäß einem Verfahren nach einem der vorhergehenden Ansprüche durchzuführen.

8. Computersystem zum Kommunizieren über eine Inter-Applikations-Kommunikationsstruktur bzw. Kommunikationsstruktur zwischen den einzelnen Anwendungen unter Verwendung eines Drahts (200), der Anwendungen in einem Mashup verbindet, wobei der Draht (200) ein oder mehrere Ausgangs- bzw. Ausgabeelemente, ein Eingangs- bzw. Eingabeelement, ein oder mehrere Eingangs- bzw. Eingabefelder und ein oder mehrere Ausgangs- bzw. Ausgabefelder umfasst, wobei der Draht (200) einen Transformator enthält, der Informationen gemäß implementierter Definitionen übersetzt, wodurch eine Kommunikation zwischen den Anwendungen ermöglicht wird, wobei das Computersystem umfasst:
einen Speicher, der eine client-seitige Benutzerschnittstelle und einen client-seitigen Aktions-Handler speichert; und
einen oder mehrere Prozessoren, die, wenn ausgeführt:
eine client-seitenbasierte JavaScript-Darstellung des Drahts (200) herleiten;
eine server-seitenbasierte Java-Darstellung des Drahts (200) herleiten;
wobei die client-seitenbasierte Darstellung und die server-seitenbasierte Darstellung dieselben Metadaten nutzen und dieselben Definitionen teilen;
eine Benutzerinteraktion durch eine client-seitige Benutzerschnittstelle zu identifizieren, die kommunikativ mit einem server-seitigen Computer gekoppelt ist, wobei die Benutzerinteraktion eine Navigation von einer der Anwendungen zu einer anderen der Anwendungen auslöst;
dynamisch bestimmen, ob die identifizierte Benutzerinteraktion auf der Client-Seite oder der Server-Seite zu verarbeiten ist, wobei die dynamische Bestimmung gemäß aller einer Mehrzahl von Kriterien gemacht wird, wobei die Kriterien umfassen: Prozess- bzw. Verarbeitungsfähigkeit, Anzahl an Roundtrips, Betriebsumgebung, Schwierigkeiten beim Sicherstellen der Konsistenz bzw. Widerspruchsfreiheit zwischen den Anwendungen vor dem Auslösen der Navigation, und ob die Anwendungen
- nur auf der Client-Seite sind,
- basierend auf der Server-Seite mit einem client-seitigen Front-End sind, oder
- eine Kombination von Client-Seite und server-basierten Anwendungen sind;
wenn die Benutzerinteraktion auf der Client-Seite zu verarbeiten ist, einen client-seitigen Aktions-Handlers aufrufen; und
wenn die Benutzerinteraktion auf der Server-Seite zu verarbeiten ist, anfordern, dass ein server-seitiger Aktions-Handler die Interaktion verarbeitet.

9. Computersystem nach Anspruch 8, wo das Anfordern des einen oder der mehreren Prozessoren, dass ein server-seitiger Aktions-Handler die Interaktion verarbeitet, umfasst, dass der eine oder die mehreren Prozessoren:
bestimmen, ob die Benutzerinteraktion eine synchrone oder asynchrone Aktion beinhaltet; und
anfordern, dass einer eines synchronen server-seitigen Aktions-Handlers oder eines asynchronen server-seitigen Aktions-Handlers die Interaktion verarbeitet, und zwar basierend auf der Bestimmung.

10. Computersystem nach Anspruch 8 oder 9, wo der Speicher ferner ein Regel-Repository speichert und wo der eine oder die mehreren Prozessoren dynamisch bestimmen, ob die identifizierte Benutzerinteraktion auf der Client-Seite oder der Server-Seite zu verarbeiten ist, und zwar unter Verwendung des Regel-Repository.

11. Computersystem nach Anspruch 10, wo das Regel-Repository einen Primärschlüssel enthält, der auf die bestimmte Interaktion abgebildet bzw. gemappt ist bzw. wird.

12. Computersystem nach Anspruch 10 oder 11, wo das Regel-Repository Regeln enthält, die dynamische Ausdrücke speichern, um zu entscheiden, wie die Benutzerinteraktion zu verarbeiten ist.

13. Computersystem nach einem der Ansprüche 8 bis 12, wobei der eine oder die mehreren Prozessoren ferner betriebsfähig sind, den client-seitigen Aktions-Handler mit Benutzerschnittstellencode von dem server-seitigen Computer zu empfangen.

## Revendications

1. Procédé mis en oeuvre par ordinateur pour l'exécution indépendante de l'emplacement d'opérations d'interface utilisateur en utilisant un câble (200) qui connecte des applications dans un composite, dans lequel le câble (200) inclut un ou plusieurs éléments de sortie, un élément d'entrée, un ou plusieurs champs d'entrée et un ou plusieurs champs de sortie, dans lequel le câble (200) contient un transformateur qui traduit des informations en fonction de définitions mises en oeuvre, permettant de ce fait une communication parmi les applications, le procédé comprenant les étapes suivantes exécutées par un ou plusieurs processeurs:
dériver une représentation JavaScript basée côté client du câble (200) ;
dériver une représentation Java basée côté serveur du câble (200) ;
dans lequel la représentation basée côté client et la représentation basée côté serveur utilisent les mêmes métadonnées et partagent les mêmes définitions ;
identifier une interaction d'utilisateur par une interface utilisateur côté client qui est raccordée de manière à pouvoir communiquer à un ordinateur côté serveur, dans lequel l'interaction d'utilisateur déclenche une navigation d'une des applications vers une autre des applications ;
déterminer dynamiquement s'il faut traiter l'interaction d'utilisateur identifiée sur le côté client ou le côté serveur, dans lequel la détermination dynamique est faite en fonction de l'ensemble d'une pluralité de critères, dans lequel les critères incluent la capacité de traitement, le nombre d'allers et retours, l'environnement d'exploitation, la difficulté à garantir une cohérence parmi les applications avant de déclencher la navigation et le fait que les applications sont
- uniquement sur le côté client,
- basées sur le côté serveur avec une extrémité frontale côté client, ou
- une combinaison d'applications côté client et basées sur le serveur ;
si l'interaction d'utilisateur doit être traitée sur le côté client, appeler un gestionnaire d'action côté client ; et
si l'interaction d'utilisateur doit être traitée sur le côté serveur, demander qu'un gestionnaire d'action côté serveur traite l'interaction.

2. Procédé mis en oeuvre par ordinateur selon la revendication 1, où demander qu'un gestionnaire d'action côté serveur traite l'interaction comprend :
déterminer si l'interaction d'utilisateur implique une action synchrone ou asynchrone ; et
demander qu'un gestionnaire parmi un gestionnaire d'action côté serveur synchrone ou un gestionnaire d'action côté serveur asynchrone traite l'interaction en fonction de la détermination.

3. Procédé mis en oeuvre par ordinateur selon la revendication 1 ou 2, où déterminer dynamiquement s'il faut traiter l'interaction d'utilisateur identifiée sur le côté client ou le côté serveur comprend utiliser un référentiel de règles pour déterminer s'il faut traiter l'interaction d'utilisateur identifiée sur le côté client ou le côté serveur.

4. Procédé mis en oeuvre par ordinateur selon la revendication 3, où le référentiel de règles inclut une clé primaire qui est mise en correspondance avec l'interaction particulière.

5. Procédé mis en oeuvre par ordinateur selon la revendication 3 ou 4, où le référentiel de règles inclut des règles qui stockent des expressions dynamiques pour décider comment l'interaction d'utilisateur doit être traitée.

6. Procédé mis en oeuvre par ordinateur selon l'une quelconque des revendications précédentes, comprenant en outre recevoir le gestionnaire d'action côté client avec du code d'interface utilisateur provenant de l'ordinateur côté serveur.

7. Produit de programme informatique comprenant des instructions lisibles par ordinateur qui, lors de son chargement et exécution dans un ordinateur et/ou système de réseau informatique, amène l'ordinateur et/ou le système de réseau informatique à réaliser des opérations conformément à un procédé selon l'une quelconque des revendications précédentes.

8. Système informatique pour communiquer par le biais d'une infrastructure de communication inter-application en utilisant un câble (200) qui connecte des applications dans un composite, dans lequel le câble (200) inclut un ou plusieurs éléments de sortie, un élément d'entrée, un ou plusieurs champs d'entrée et un ou plusieurs champs de sortie, dans lequel le câble (200) contient un transformateur qui traduit des informations en fonction de définitions mises en oeuvre, permettant de ce fait une communication parmi les applications, le système informatique comprenant :
de la mémoire stockant une interface utilisateur côté client et un gestionnaire d'action côté client ; et
un ou plusieurs processeurs qui lors de leur exécution :
dérivent une représentation JavaScript basée côté client du câble (200) ;
dérivent une représentation Java basée côté serveur du câble (200) ;
dans lequel la représentation basée côté client et la représentation basée côté serveur utilisent les mêmes métadonnées et partagent les mêmes définitions ;
identifient une interaction d'utilisateur par une interface utilisateur côté client qui est raccordée de manière à pouvoir communiquer à un ordinateur côté serveur, dans lequel l'interaction d'utilisateur déclenche une navigation d'une des applications vers une autre des applications ;
déterminent dynamiquement s'il faut traiter l'interaction d'utilisateur identifiée sur le côté client ou le côté serveur, dans lequel la détermination dynamique est faite en fonction de l'ensemble d'une pluralité de critères, dans lequel les critères incluent la capacité de traitement, le nombre d'allers et retours,
l'environnement d'exploitation, la difficulté à garantir une cohérence parmi les applications avant de déclencher la navigation et le fait que les applications sont
- uniquement sur le côté client,
- basées sur le côté serveur avec une extrémité frontale côté client, ou
- une combinaison d'applications côté client et basées sur le serveur ;
si l'interaction d'utilisateur doit être traitée sur le côté client, appeler le gestionnaire d'action côté client ; et
si l'interaction d'utilisateur doit être traitée sur le côté serveur, demander qu'un gestionnaire d'action côté serveur traite l'interaction.

9. Système informatique selon la revendication 8, où le ou les processeurs demandant qu'un gestionnaire d'action côté serveur traite l'interaction comprend le ou les processeurs :
déterminant si l'interaction d'utilisateur implique une action synchrone ou asynchrone ; et
demandant qu'un gestionnaire parmi un gestionnaire d'action côté serveur synchrone ou un gestionnaire d'action côté serveur asynchrone traite l'interaction en fonction de la détermination.

10. Système informatique selon la revendication 8 ou 9, où la mémoire stocke en outre un référentiel de règles et où le ou les processeurs déterminent dynamiquement s'il faut traiter l'interaction d'utilisateur identifiée sur le côté client ou le côté serveur en utilisant le référentiel de règles.

11. Système informatique selon la revendication 10, où le référentiel de règles inclut une clé primaire qui est mise en correspondance avec l'interaction particulière.

12. Système informatique selon la revendication 10 ou 11, où le référentiel de règles inclut des règles qui stockent des expressions dynamiques pour décider comment l'interaction d'utilisateur doit être traitée.

13. Système informatique selon l'une quelconque des revendications 8 à 12, le ou les processeurs pouvant en outre opérer pour recevoir le gestionnaire d'action côté client avec du code d'interface utilisateur provenant de l'ordinateur côté serveur.
